# EUROPÄISCHE PATENTSCHRIFT

(11) **EP 4 198 261 B1**
(45) Veröffentlichungstag und Bekanntmachung des Hinweises auf die Patenterteilung: **09.04.2025**
(21) Anmeldenummer: 22209994.7
(22) Anmeldetag: 28.11.2022
(51) Int. Cl.: F01C 21/10, F04C 2/16, F04C 15/00, F04C 15/06, F04C 11/00, F04C 29/04

(54) **SCHRAUBENSPINDELPUMPE**
SCREW SPINDLE PUMP
POMPE À VIS

(30) Priorität: 14.12.2021 DE 102021133106
(43) Veröffentlichungstag der Anmeldung: 21.06.2023
(73) Patentinhaber: Leistritz Pumpen GmbH, 90459 Nürnberg (DE)
(72) Erfinder: METZ, Herr Jürgen, 90537 Feucht (DE); LISSEK, Kristin, 90763 Fürth (DE); Popp, Florian, 90443 Nürnberg (DE)
(74) Vertreter: Lindner Blaumeier Patent- und Rechtsanwälte

(56) Entgegenhaltungen:
- EP-A2- 2 322 803
- DE-A1- 102017 218 287
- DE-A1- 102019 118 086
- DE-B4- 102016 100 535

## Beschreibung

Die Erfindung betrifft eine Schraubenspindelpumpe, mit einem Spindelgehäuse, in dem eine Antriebsspindel und wenigstens eine mit dieser kämmende Laufspindel in Spindelbohrungen aufgenommen sind, und mit einem das Spindelgehäuse einhausenden Außengehäuse, an dem ein axialer Einlassanschluss und ein radialer Auslassanschluss vorgesehen sind.

Eine solche Schraubenspindelpumpe dient zum Fördern eines Fluids und kommt in unterschiedlichsten Bereichen zum Einsatz. Exemplarisch ist die Förderung eines Kraftstoffs oder eines sonstigen Betriebs- oder Versorgungsfluids, beispielsweise eines Kühlmittels oder Reinigungsmittels, eines Kraftfahrzeugs zu nennen. Auch in anderen Land- oder Luftfahrzeugen wie z.B. Flugzeugen oder Drohnen können solche Schraubenspindelpumpen eingesetzt werden, wobei die Einsatzmöglichkeiten hierauf nicht beschränkt sind. Eine solche Schraubenspindelpumpe weist ein Spindelgehäuse, das auch als Innengehäuse bezeichnet werden kann, auf, in dem wenigstens zwei Spindeln, nämlich eine Antriebsspindel und eine Laufspindel, in jeweiligen Spindelbohrungen, die einander jedoch schneiden, aufgenommen sind. Die Antriebs- und die Laufspindel weisen jeweils ein Spindelprofil auf, wobei die beiden Spindelprofile miteinander kämmen. Die Antriebsspindel ist mit einem Antriebsmotor verbunden und kann aktiv gedreht werden, was auch zu einer Rotation der kämmenden Laufspindel führt. Durch die Spindelrotation wird kontinuierlich ein Fördervolumen in Richtung der Spindellängsachse verschoben, in dem das Fluid gefördert wird. Das Spindelgehäuse ist in einem Außengehäuse aufgenommen, das beispielsweise topfartig sein kann und an einer Seite über eine axiale Wand abgeschlossen sein kann, während an der anderen Seite beispielsweise der Antriebsmotor angeflanscht wird. Denkbar ist es aber auch, dass das Außengehäuse mehrteilig ist und ein zylindrisches Basisteil aufweist, das an der einen Seite über einen Deckel abgeschlossen ist, während an der anderen Seite wiederum der Antriebsmotor angeflanscht ist. Das Außengehäuse weist einen axialen Einlassanschluss, also einen entsprechenden Anschlussstutzen auf, an den eine Zuleitung angeschlossen werden kann, worüber die Saugseite definiert wird. Es weist ferner einen radialen Auslassanschluss auf, also einen entsprechenden Auslassstutzen, über den die Druckseite definiert wird. Dort tritt das geförderte Fluid mit dem jeweiligen, von der Pumpe erzeugbaren Druck aus. Eine derartige Pumpe ist beispielsweise in DE 102018 131 587 A1 beschrieben.

Die Druckschriften DE 10 2017 218 287 A1 und DE 10 2019 118 086 A1 offenbaren Schraubenspindelpumpen ähnlicher Bauart. In ersterer erfolgt eine Kühlung des Antriebsmotors durch eine Kommunikation des Anschlussstutzens mit dem Aufnahmeraum für den Rotor durch eine gesonderte Öffnung, wie dort in Absatz 25 beschrieben und Fig. 1 dargestellt. In letzterer ist eine Kühlung des Pumpenantriebs nicht thematisiert. In DE 10 2016 100 535 B4 ist eine Pumpe anderen Aufbaus mit Kühlung des Antriebsmotors mittels einer Abzweigung eines Teils des geförderten Fluids in den Motorraum offenbart.

Bei der bekannten Pumpe ist ein außermittig am Außengehäuse vorgesehener axialer Einlassanschluss vorgesehen, über den der Zulauf erfolgt. Das Fluid strömt sodann zunächst seitlich zu einer axialen Einlassöffnung des Spindelgehäuses, wird durch diese gefördert und verlässt das Spindelgehäuse an einer radialen Gehäusebohrung, von wo aus es über einen schmalen Verbindungsraum zwischen dem Spindelgehäuse und dem Außengehäuse zum radialen Auslassanschluss strömt. Das heißt, dass das unter Druck stehende Fluid das Spindelgehäuse radial verlässt und letztlich unmittelbar über den Auslassanschuss abgefördert wird.

Der Erfindung liegt das Problem zugrunde, eine demgegenüber verbesserte Schraubenspindelpumpe anzugeben.

Zur Lösung dieses Problems ist erfindungsgemäß eine Schraubenspindelpumpe wie einleitend beschrieben vorgesehen, bei der das Spindelgehäuse einen axialen Fluidauslass für das über die Antriebs- und die Laufspindel durch das Spindelgehäuse geförderte Fluid aufweist, sowie mit einem Antriebsmotor umfassend eine Antriebswelle, die durch eine Bohrung in einer das Innere des Außengehäuses axial schließenden Gehäusewand läuft und mit der Antriebsspindel gekoppelt ist, wobei ein Teil des aus dem Fluidauslass des Spindelgehäuses strömenden Fluids durch die dichtungslose Bohrung entlang der Antriebswelle in den Antriebsmotor strömt, diesen kühlt und zurück in das Außengehäuse strömt.

Die erfindungsgemäße Schraubenspindelpumpe zeichnet sich dadurch aus, dass einerseits dem geförderten, unter Druck stehenden Fluid eine zusätzliche Kühlfunktion zukommt, und dass die Pumpe andererseits kein rotativ beanspruchtes Dichtungselement aufweist, das verschleißanfällig ist.

Erfindungsgemäß weist das Spindelgehäuse einen axialen Fluidauslass auf, das heißt, dass das Fluid sowohl axial in das Spindelgehäuse eintritt als auch axial austritt. In der Austrittsrichtung befindet sich der Antriebsmotor, der eine Antriebswelle aufweist, die durch eine das Außengehäuse respektive das Pumpengehäuse an dieser Seite axial schließende Gehäusewand durch eine dort vorgesehene Bohrung in das Innere des Außengehäuses läuft. Dort ist sie über eine geeignete Kupplungseinrichtung mit der Antriebsspindel zum Antreiben derselben gekoppelt. Die Gehäusewand schließt einerseits das Pumpengehäuse axial, lässt jedoch einen kleinen Ringspalt offen, das heißt, dass der Bohrungsdurchmesser etwas größer als der Antriebsspindeldurchmesser ist. Durch diesen Ringspalt kann nun ein geringer Teil des unter Druck stehenden, geförderten Fluids axial entlang der Antriebswelle aus dem Pumpengehäuse in das Gehäuse des Antriebsmotors strömen, wo es sich je nach Strömungsweg entsprechend verteilt und auf diese Weise den Motor im Bereich der Flächen oder Motorelemente, entlang welcher oder um welche das Fluid strömt, kühlt. Das Fluid zirkuliert im Motorgehäuse und strömt wiederum entlang der Antriebswelle in das Außengehäuse zurück, wobei aber grundsätzlich eine Rückströmung auch über eine oder mehrere weitere, kleinere Durchbrechungen in der Gehäusewand erfolgen kann. Das heißt, dass über diesen Teil des Fluids eine aktive Motorkühlung erfolgen kann, mithin also der Antriebsmotor ein Nassläufer ist, wobei sich diese aktive Kühlung vorteilhaft auf den Wirkungsgrad respektive die Motorleistung auswirkt.

Wie beschrieben strömt das Fluid zumindest entlang der Antriebswelle durch die Bohrung respektive den Ringspalt zwischen Bohrungsinnenwand und Antriebswelle axial in das Motorgehäuse bzw. kann hierüber auch zurück ins Außengehäuse strömen. Das heißt, dass in der Bohrung respektive in dem Ringspalt keine Dichtung in Form eines Wellendichtrings aufgenommen ist, so dass demzufolge in diesem Bereich kein rotativ beaufschlagtes Dichtelement vorgesehen ist, das im Laufe der Zeit verschleißgefährdet ist. Das heißt, dass, außer einer entsprechenden Lagerung und gegebenenfalls Abdichtung der Antriebswelle im Motorgehäuse selbst, die Antriebswelle im Übergang zum Außengehäuse respektive im Außengehäuse nicht radial abgedichtet geführt ist.

Auch die beiden anderen rotativen Elemente neben der Antriebswelle, nämlich die Antriebs- und die Laufspindel, sind nicht über rotativ beaufschlagte Dichtelemente abgedichtet, das heißt, dass keines der rotierenden Elemente der Schraubenspindelpumpe am oder im Außen- oder Spindelgehäuse mittels eines rotativ beaufschlagten Dichtelements abgedichtet ist. Ein etwaiger Dichtelementverschleiß kann damit vorteilhaft ausgeschlossen werden. Die einzigen Dichtelemente sind statische Dichtelemente, die den Übergang beispielsweise zwischen dem Außengehäuse und dem Motorgehäuse axial und/oder radial abdichten, oder den Übergang zwischen zwei Außengehäusebauteilen und dergleichen. Diese Dichtelemente sind im Betrieb jedoch nicht mechanisch veränderlich beaufschlagt, und daher nicht verschleißanfällig.

Wie beschrieben, erstreckt sich die vom Antriebsmotor kommende Antriebswelle durch eine Bohrung in einer das Außengehäuse axial schließenden Gehäusewand. Es sind nun unterschiedliche Varianten bezüglich der Anordnung respektive Ausbildung der Gehäusewand denkbar. Gemäß einer ersten Alternative kann der Antriebsmotor unmittelbar auf das Außengehäuse gesetzt sein, wobei ein Gehäuse des Antriebsmotors eine die Gehäusewand bildende Stirnwand aufweist. Das heißt, dass das Gehäuse des Antriebsmotors, in dem die entsprechenden Motorkomponenten wie Rotor und Stator sowie die Elektronik etc. aufgenommen sind, mit einer axialen Gehäusewand versehen ist, in der die entsprechende Bohrung, durch die die Antriebswelle greift, ausgebildet ist. Der Antriebsmotor wird nun direkt auf das Außengehäuse aufgesetzt und damit verschraubt, so dass die antriebsmotorseitige Gehäusewand den axialen Außengehäuseabschluss bildet. Der Kühlfluidanteil strömt folglich unmittelbar durch die antriebsmotorseitige Gehäusewand in den Antriebsmotor.

Alternativ ist es denkbar, dass ein plattenförmiges Zwischenbauteil vorgesehen ist, das auf das Außengehäuse gesetzt ist und die Gehäusewand bildet, wobei der Antriebsmotor auf das Zwischenbauteil gesetzt ist. Bei dieser Variante wird ein Zwischenbauteil zwischen das Außengehäuse und den Antriebsmotor respektive das Motorgehäuse gesetzt, das letztlich eine Art Montageschnittstelle bildet.

Dieses plattenförmige Zwischenbauteil weist die Gehäusewand mit der Bohrung auf, durch die die motorseitige Antriebswelle greift. Das Motorgehäuse kann daher an seiner zur Zwischenplatte weisenden Seite letztlich offen ausgeführt werden oder, wenn dort beispielsweise nur die Elektronik gekühlt werden soll, mit einer entsprechenden Verschlusswand ausgeführt sein, hinter der die Elektronik vorgesehen ist, wobei das Fluid diese Verschlusswand zu Kühlzwecken anströmt oder dergleichen. Das Zwischenbauteil weist beispielsweise entsprechende Durchgangsbohrungen auf, durch die Befestigungsschrauben geführt werden können, über die das Außengehäuse und das Motorgehäuse, die entsprechende Bohrungen aufweisen, geführt werden, so dass mittels gemeinsamer Befestigungselemente alle drei Teile miteinander axial verschraubt werden können.

Wie bereits einleitend beschrieben, ist beispielsweise bei der aus DE 10 2018 131 587 A1 beschriebenen Pumpe am Spindelgehäuse nur eine radiale Gehäusebohrung, aus der das unter Druck stehende, geförderte Fluid radial in einen schmalen Verbindungsraum zwischen dem Spindelgehäuse und dem Außengehäuse und von dort zum radialen Auslassanschluss strömt. Im Bereich dieser radialen Gehäuseöffnung des Spindelgehäuses und des schmalen Verbindungsraums, also der Druckseite, liegt das geförderte Fluid mit entsprechend hohem Pumpendruck vor, so dass lokal ein hoher Druck auf das Spindelgehäuse respektive in dem Zwischengehäusebereich, in dem der schmale Verbindungsraum vorgesehen ist, lastet. Bei der erfindungsgemäßen Schraubenspindelpumpe ist kein radialer Auslass aus dem Spindelgehäuse, sondern ein axialer Auslass vorgesehen, so dass der dem Kühlzweck dienende Fluidanteil axial in das Motorgehäuse strömen kann. Das verbleibende Fluidvolumen ist zum radialen, am Außengehäuse vorgesehenen Auslassanschluss zu führen, wozu es umzulenken ist. Gemäß einer zweckmäßigen Weiterbildung kommuniziert vorteilhafterweise der axiale Fluidauslass für das über die Antriebs- und die Laufspindel durch das Spindelgehäuse geförderte Fluid mit einer zwischen dem Spindelgehäuse und dem Außengehäuse ausgebildeten, sich um 360° erstreckenden Fluidkammer, die wiederum mit dem radialen Auslassanschluss kommuniziert. Bei der erfindungsgemäßen Schraubenspindelpumpe ist vorteilhaft eine radiale Fluidkammer zwischen dem Spindelgehäuse und dem Außengehäuse vorgesehen, die um 360° um das Spindelgehäuse läuft, dieses also als Ringkammer umgibt. Diese ringförmige Fluidkammer liegt an der Druckseite, ist also eine Druckkammer, da ihr das aus dem Spindelgehäuse austretende, unter Druck stehende Fluid zugeführt wird. Dieses Fluid tritt aus dem Spindelgehäuse axial aus, das heißt, dass eine entsprechend große, axiale Fluidauslassöffnung am Spindelgehäuse vorgesehen ist. Irgendwelcher Radialbohrungen oder ähnliche Konfigurationen sind wie bereits beschrieben nicht vorgesehen. Da wie beschrieben die radiale Fluid- oder Druckkammer das Innengehäuse vollständig, also um 360° umlaufend umgreift, liegt mit besonderem Vorteil um das Innengehäuse allseitig der entsprechende Pumpendruck an, das heißt, dass letztlich nahezu symmetrische Druckverhältnisse am Spindelgehäuse gegeben sind respektive auf diesem lasten. Hierdurch werden einerseits lokale Drucküberhöhungen, wie sie aus der unsymmetrischen Druckverteilung, wie aus dem Stand der Technik bekannt, resultieren, vermieden. Zum anderen werden, resultierend aus dem sich auch im Spindelgehäuse aufbauenden Fluiddruck ergebende, wenngleich geringe Deformationen des Spindelgehäuses vermieden, da das Spindelgehäuse wie beschrieben radial außen mit dem in der Fluidkammer herrschenden Fluiddruck belastet und daher stabilisiert ist. Das heißt, dass erfindungsgemäß ein Fluidmantel realisiert wird, der einen entsprechenden Radialdruck ausbildet, der das Innengehäuse stabilisiert. Dies ist insbesondere dann von Vorteil, wenn das Spindelgehäuse aus einem etwas weicheren Material, beispielsweise einem Kunststoff, gefertigt ist, was bei kleineren Schraubenspindelpumpen durchaus der Fall sein kann, die aber gleichwohl entsprechend hohe Pumpendrucke erzeugen können.

Die erfindungsgemäß vorgesehene Fluidkammer erstreckt sich wie beschrieben einerseits um 360° um das Spindelgehäuse. Andererseits sollte sie das Spindelgehäuse über wenigstens einen Teil seiner axialen Länge umgreifen. Die Fluidkammer sollte sich dabei um wenigstens die halbe Länge der Spindelbohrung respektive des Spindelgehäuses erstrecken, gegebenenfalls auch länger, beispielsweise über 2/3 der Länge der Spindelbohrungen respektive des Spindelgehäuses. Denkbar ist es auch, dass sich die Fluidkammer über die gesamte Länge der Spindelbohrungen bzw. des Spindelgehäuses erstreckt.

Das Spindelgehäuse ist im Außengehäuse entsprechend zu lagern, wie natürlich auch die Fluidkammer axial gesehen entsprechend abgedichtet werden muss. Hierzu sind unterschiedliche Möglichkeiten denkbar. Gemäß einer ersten Alternative kann die Fluidkammer über zwei Radialflansche axial begrenzt sein, wobei der eine Radialflansch mehrere axiale Durchbrechungen aufweist, über die die Fluidkammer mit dem Fluidauslass des Spindelgehäuses verbunden ist. Über diese Radialflansche ist das Spindelgehäuse im Außengehäuse aufgenommen und radial abgestützt. Der druckseitig vorgesehene Radialflansch weist entsprechende Durchbrechungen auf, die es ermöglichen, dass das aus dem Spindelgehäuse axial ausströmende Fluid nach seiner Umlenkung axial quasi zurück in die Fluidkammer strömen kann. Eine Abdichtung an dieser Seite ist natürlich erforderlich. Der andere, quasi saugseitig vorgesehene Radialflansch hingegen dient der Abdichtung, wozu in diesem Bereich ein oder mehrere geeignete Dichtmittel vorgesehen sind, über die das Spindelgehäuse zum Außengehäuse hin abgedichtet ist, so dass auch die Fluidkammer an diesem saugseitigen Ende abgedichtet ist.

Alternativ zur Ausbildung zweier Radialflansche ist es auch denkbar, die Fluidkammer über einen Radialflansch einerseits, der mehrere axiale Durchbrechungen aufweist, über die die Fluidkammer mit dem Fluidauslass des Spindelgehäuses verbunden ist, und andererseits über ein Deckelbauteil axial zu begrenzen. Hier kommt nur ein druckseitig vorgesehener Radialflansch zum Einsatz, der, wie auch bei der vorstehend beschriebenen Ausführungsform, axiale Durchbrechungen aufweist, um den Rückstrom des geförderten, unter Druck stehenden Fluids in die Fluidkammer zu ermöglichen. Die andere Seite der Fluidkammer ist über ein auf das zylindrische Basisteil des Außengehäuses aufgesetztes Deckelbauteil verschlossen respektive begrenzt, an dem der Einlassanschluss vorgesehen ist. Während also bei der ersten Variante der saugseitige Radialflansch die Kammerbegrenzung erwirkt, wird bei der zweiten Variante die axiale Kammerbegrenzung über das Deckelbauteil realisiert.

Um das axial aus dem Spindelgehäuse ausströmende Fluid zur Fluidkammer umzulenken, kann gemäß einer ersten Variante die Stirnwand des Gehäuses des Antriebsmotors eine oder mehrere, das vom Fluidauslass kommende Fluid zur Fluidkammer umlenkende Umlenkkavitäten aufweisen. Bei dieser Variante ist das Antriebsgehäuse mit der Gehäusewand, die das Außengehäuse axial schließt, versehen, wobei die Gehäusewand mit einer oder mehreren Umlenkkavitäten ausgerüstet ist, die die radiale und axiale Umlenkung zu der das Spindelgehäuse radial umgebenden Fluidkammer erwirken.

Für den Fall, dass ein Zwischenbauteil zwischen dem Außengehäuse und dem Motorgehäuse zum Einsatz kommt, kann dieses Zwischenbauteil eine oder mehrere, das Fluid zur Fluidkammer umlenkende Umlenkkavitäten aufweisen. Hier weist wie ausgeführt das Zwischenbauteil die das Außengehäuse axial schließende Gehäusewand auf, weshalb in diesem Fall das Zwischenbauteil mit der oder den Umlenkkavitäten zu versehen ist.

Die Umlenkkavität ist bevorzugt eine ringförmige Nut oder eine topfartige Vertiefung, die im Bereich des Nut- oder Vertiefungsgrunds rundlich ausgeführt ist. Das heißt, dass die Gehäusewand quasi kalottenförmig ausgewölbt ist, so dass sich eine entsprechende Nut oder Vertiefung ausbildet, in die das Fluid zunächst axial einströmen kann, und die sich radial nach außen erstreckt, so dass das Fluid radial nach außen geführt wird. Da diese Vertiefung mit der Fluidkammer kommuniziert, sei es unmittelbar, sei es durch entsprechende Durchbrechungen in einem spindelgehäuseseitigen Radialflansch, kann das Fluid sodann axial zurück in die Fluidkammer strömen und sich dort verteilen, bevor es zum Fluidauslass strömt. Diese konkave respektive kalottenförmige Vertiefung ermöglicht daher eine allseitige Fluidumlenkung und einen symmetrischen Fluidfluss in die Fluidkammer. Natürlich kann die Nut oder Vertiefung auch über sich axial und radial erstreckende Stege in einzelnen Nut- oder Vertiefungsabschnitte unterteilt sein, wenn solche Stege z. B. zu Stabilisierungszwecken vorzusehen sind. Durch die rundliche Ausgestaltung des Nut- oder Vertiefungsgrunds wird, neben der gezielten Strömungsführung, auch sichergestellt, dass es hierbei nicht zur Entwicklung irgendwelcher Strömungsgeräusche kommt, da keine Ecken oder Kanten im Nut- oder Vertiefungsbereich vorgesehen sind, die strömungstechnisch ungünstig wären.

Wie beschrieben, ermöglicht der erfindungsgemäß über die Fluidkammer realisierte Fluid- oder Druckmantel die gezielte Erzeugung eines allseitigen, radialen Stabilisierungsdrucks auf das Spindelgehäuse, um Ausweitungen der Toleranzen am Spindelgehäuse oder etwaige betriebsbedingte, geringe Geometrieänderungen zu vermeiden. Dies insbesondere, wenn das Spindelgehäuse aus Kunststoff gefertigt ist, wie es erfindungsgemäß vorgesehen sein kann. Zusätzlich oder alternativ ist es auch denkbar, das Außengehäuse und das Zwischenbauteil oder, sofern vorgesehen, auch das Deckelbauteil als axialem Außengehäuseverschluß aus Kunststoff zu fertigen. Das heißt, dass es möglich ist, alle gehäuserelevanten Bauteile aus Kunststoff zu fertigen, wie darüber hinaus aber auch die grundsätzliche Möglichkeit besteht, selbst die Spindeln aus Kunststoff herzustellen. Bevorzugt jedoch sind zumindest diese aus Metall.

Bei der Schraubenspindelpumpe kann es sich um eine Zwei-Spindel-Pumpe handeln, die nur eine Antriebsspindel und eine seitlich dazu positionierte Laufspindel aufweist. Alternativ ist es auch denkbar, dass die Schraubenspindelpumpe eine Drei-Spindel-Pumpe ist, mit einer mittigen Antriebsspindel und zwei beidseits davon, um 180° versetzt angeordneten Laufspindeln. Es sind also unterschiedliche Pumpentypen in der erfindungsgemäßen Weise realisierbar.

Weiterhin kann vorgesehen sein, dass der Einlassanschluss mit einer Zentralachse des die Antriebsspindel und die eine oder die beiden Laufspindeln umfassenden Spindelpakets fluchtend angeordnet ist. Das heißt, dass der Einlassstutzen quasi in axialer Verlängerung der Zentralachse des Spindelpakets angeordnet ist. Bei einer zwei-spindeligen Schraubenspindelpumpe liegt diese Zentralachse letztlich mittig zwischen der Antriebs- und der Laufspindel. Bei einer Drei-Spindel-Pumpe liegt diese Zentralachse in der Längsachse der mittigen Antriebsspindel. Diese Ausgestaltung ermöglicht es mit besonderem Vorteil, dass das zuströmende, axial angesaugte Fluid innerhalb des Außengehäuses nicht erst zum Spindelgehäuse hin umgelenkt werden muss, was gegebenenfalls mit Strömungsgeräuschen verbunden ist. Vielmehr ist ein unmittelbarer axialer Zustrom in das Spindelgehäuse möglich.

Neben der Schraubenspindelpumpe selbst betrifft die Erfindung ferner die Verwendung einer Schraubenspindelpumpe der vorstehend beschriebenen Art in einem Kraftfahrzeug zum Fördern einer Betriebsflüssigkeit. Diese Betriebsflüssigkeit kann beliebiger Natur sein. Es kann sich beispielsweise um eine Reinigungsflüssigkeit handeln, beispielsweise eine Scheibenreinigungsflüssigkeit, die über die Pumpe gefördert wird. Alternativ, und ein bevorzugter erfindungsgemäßer Verwendungszweck, ist die Verwendung der Schraubenspindelpumpe als Kühlmittelpumpe, über die ein Kühlmittel gefördert wird. Bei dem Kühlmittel kann es sich um ein beliebiges fluides Kühlmittel handeln. Die Verwendung betrifft insbesondere den Einsatz zum Fördern eines der Kühlung eines Energiespeichers dienenden Kühlmittels. Ein solcher Energiespeicher kommt zunehmend bei elektromotorisch angetriebenen Kraftfahrzeugen zum Einsatz und ist in Form einer entsprechend dimensionierten Traktions- oder Antriebsbatterie vorgesehen. Dieser Energiespeicher bedarf einer entsprechenden Kühlung mittels eines Kühlmittels, das über die erfindungsgemäße Schraubenspindelpumpe auf einfache Weise in der geforderten Menge problemlos gefördert werden kann.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Schraubenspindelpumpe einer ersten Ausführungsform in einer Schnittansicht,
- Fig. 2: eine Prinzipdarstellung einer erfindungsgemäßen Schraubenspindelpumpe einer zweiten Ausführungsform in einer Schnittansicht, und
- Fig. 3: eine Prinzipdarstellung einer erfindungsgemäßen Schraubenspindelpumpe einer dritten Ausführungsform in einer Schnittansicht.

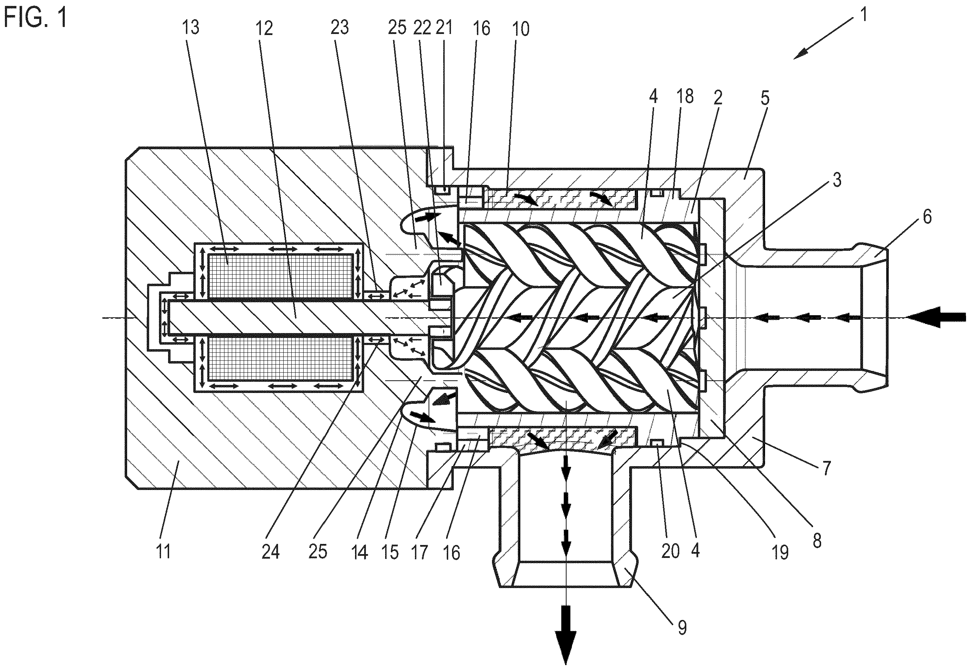

Fig. 1 zeigt eine erfindungsgemäße Schraubenspindelpumpe 1 in einer ersten Ausführungsform. Diese umfasst ein Spindelgehäuse 2, in dem im gezeigten Beispiel drei Spindeln, nämlich eine Antriebsspindel 3 sowie zwei um 180° seitlich versetzt neben der anderen Spindel positionierte Laufspindeln 4, in entsprechenden, einander schneidenden Spindelbohrungen aufgenommen sind. Wie Fig. 1 zeigt, weisen alle Spindeln 3, 4 entsprechende Spindelprofile auf, die ineinandergreifen und miteinander kämmen.

Das Spindelgehäuse 2 ist in einem topfartigen Außengehäuse 5 aufgenommen, an dem hier ein mittiger und fluchtend mit der Längsachse der Antriebsspindel 3 positionierter Einlassanschuss 6, also ein entsprechender Anschlussstutzen, vorgesehen ist. Gegenüber dem Außengehäuse 5 bzw. dessen Radialflansch 7 ist das Spindelpaket aus Antriebsspindel 3 und Laufspindeln 4 axial über ein Stützelement, hier eine Passfeder 8, abgestützt. Die Passfeder 8 ist beispielsweise klemmend im Außengehäuse 5 gehaltert, oder greift in radiale Ausnehmungen im Außengehäuse 5 ein.

Am Außengehäuse 5, das beispielsweise aus Kunststoff gefertigt ist, ist des Weiteren ein radialer Auslassanschluss 9, auch hier ein Anschlussstutzen, vorgesehen, über den das über den Einlassanschluss 6 angesaugte und unter Druck stehende Fluid wieder radial austritt.

Wie Fig. 1 anschaulich zeigt, ist das Spindelgehäuse 2 nebst seiner Bestandteile im Inneren des topfförmigen Außengehäuse 5 aufgenommen. Zwischen der Außenwandung des Spindelgehäuse 2 und der Innenwandung des Außengehäuses 5 ist eine um 360° umlaufende Fluidkammer 10 vorgesehen, die sich, wie Fig. 1 zeigt, um mehr als die Hälfte der Länge des Spindelgehäuses 2 respektive der Spindelbohrungen erstreckt. In diese Fluidkammer 10 gelangt das am axialen Fluidauslass des Spindelgehäuses austretende, unter Druck stehende Fluid, das heißt, dass der axiale Fluidauslass am linken Ende des Spindelgehäuses 2 mit der Fluidkammer 10 kommuniziert. Diese kommuniziert ihrerseits mit dem Auslassanschluss 9.

Vorgesehen ist des Weiteren ein hier nur dem Prinzip nach dargestellter Antriebsmotor 11, der hier direkt auf das Außengehäuse 5 aufgesetzt ist und dort mittels geeigneter Befestigungsschrauben befestigt ist. Mit einer Antriebswelle 12, die mit einem Rotor 13 des als Elektromotor ausgeführten Antriebsmotors 11 verbunden ist, der in einem hier nicht näher gezeigten Stator angeordnet ist, ist der Antriebsmotor 11 über ein Kupplungselement 22 mit der Antriebsspindel 3 gekoppelt, so dass diese über den Antriebsmotor 11 aktiv gedreht werden kann, so dass das gesamte Spindelpaket rotiert und das über den Einlassanschluss 6 angesaugte Fluid axial fördert.

Wie beschrieben tritt das Fluid aus dem axialen Fluidauslass des Spindelgehäuses, das bei dieser Ausgestaltung am saugseitigen und druckseitigen Ende einfach axial offen ist, aus. Damit das austretende Fluid in die Fluidkammer 10, die ja, was die Förderrichtung angeht, axial zurückversetzt ist, gelangen kann, ist im gezeigten Beispiel eine Umlenkkavität 14 vorgesehen, die in dem gezeigten Beispiel an der dem Spindelgehäuse 2 zugewandten Gehäusewand 15 des Gehäuses des Antriebsmotors 11 unmittelbar ausgebildet ist. Diese Gehäusewand 15 bildet den axialen Abschluss des Außengehäuses 5, schließt dieses also an dieser Seite. Die Umlenkkavität 14 ist beispielsweise als umlaufende Ringnut oder als topfartige, kalottenförmige Vertiefung ausgebildet und bodenseitig gewölbt oder gerundet ausgeführt, so dass das Fluid, das quasi mittig einströmt, zur Seite hin radial nach außen umgelenkt und zurückgefördert wird, so dass es über entsprechende Durchbrechungen 16, die an einem Radialflansch 17 des Spindelgehäuses 2 ausgebildet sind, in die Fluidkammer 10 strömen kann.

Die Fluidkammer 10 ist am saugseitigen Ende axial über einen Radialflansch 18 des Spindelgehäuses 2 begrenzt. Dieser ist einerseits an einer Gehäuseschulter 19 des Außengehäuses 5 axial abgestützt. Zum anderen erstreckt er sich bis zur Innenwandung des Außengehäuses 5 und ist zu diesem über ein Dichtelement 20 radial abgedichtet, so dass die Fluidkammer 10 an diesem Ende geschlossen und abgedichtet ist. Am gegenüberliegenden, druckseitigen Ende ist ebenfalls ein Radialflansch 17 vorgesehen, in dem jedoch die bereits beschriebenen Durchbrechungen 16 ausgebildet sind, so dass die Fluidkammer 10 zu dieser Druckseite hin offen ist und das unter Druck stehende Fluid über die Umlenkkavität 14 in die Fluidkammer strömen kann. Die Abdichtung an dieser Seite erfolgt zwischen dem Außengehäuse 5 und dem Motorgehäuse über ein geeignetes Dichtelement 21, das an einem quasi axial in das Außengehäuse 5 eingreifenden Ringflansch des Motorgehäuses ausgebildet ist und radial abdichtet.

Im Betrieb wird die Antriebsspindel 3 über den Antriebsmotor 11 rotiert. Das über den Einlassanschluss 6 angesaugte Fluid wird axial gefördert, indem die Spindelprofile der Spindeln 3, 4 ineinander eingreifen, so dass sich axial verschobene Fördervolumina ergeben, die eine Förderung des Fluids längs des Spindelpakets erlauben.

Am druckseitigen Ende des Spindelgehäuses 2 tritt das Fluid axial aus, was vorteilhaft hinsichtlich eines möglichst geräuscharmen Betriebs ist, da hiermit keine nennenswerten Strömungsgeräusche verbunden sind. Das Fluid tritt sodann direkt in die Umlenkkavität 14, wie beschrieben beispielsweise eine Ringnut oder konkave Vertiefung, ein, über die es radial nach außen gelenkt wird und axial zurückgeführt wird, also entgegen der Förderrichtung des Spindelpakets umgelenkt wird. Es tritt über die Durchbrechungen 16 in die Fluidkammer 10 ein und über diese in den Auslassanschluss 9, wo es abgeführt wird.

In der Fluidkammer 10 herrscht der Pumpendruck, das heißt, dass in dieser das Spindelgehäuse allseitig umgebenden Fluidkammer 10 der Auslassdruck, der über die Schraubenspindelpumpe 1 erzeugt werden kann, anliegt. Dieser Druck wirkt allseitig radial auf das Spindelgehäuse 2, soweit dieses von der Fluidkammer 10, die auch als Druckkammer bezeichnet werden kann, umgriffen ist. Wie beschrieben erstreckt sich diese Fluidkammer 10 über wenigstens die halbe Länge des Spindelgehäuses 2, bevorzugt sogar etwas länger, so dass eine bestmögliche Stabilisierung des Spindelgehäuses 2 gegenüber etwaigen druckbedingten Geometrieänderungen respektive Toleranzverschiebungen gegeben ist. Dies gilt insbesondere in dem Fall, wenn das Spindelgehäuse aus Kunststoff gefertigt ist, also aus einem gegenüber Metall etwas weicheren Material.

Wie beschrieben, tritt das geförderte Fluid axial aus dem Spindelgehäuse 2 aus und gelangt in die Umlenkkavität 14, strömt also gegen die Gehäusewand 15 an. Während der größte Teil umgelenkt und abgeführt wird, gelangt ein geringer Teil des unter Druck stehenden Fluids zu Kühlzwecken in den Antriebsmotor 11, wie in Fig. 1 angedeutet. Um dies zu ermöglichen, ist ein Fluidfluss zwischen der Antriebsspindel 12 und der Innenwandung einer Bohrung 23, die in der Gehäusewand 15 ausgebildet ist, möglich. Hierzu ist der Innendurchmesser der Bohrung 23 etwas größer als der Außendurchmesser der Antriebswelle 12, so dass sich ein Ringspalt 24 ergibt, durch den das axial in Fig. 1 von rechts anströmende Fluid entlang der Antriebswelle 12 durch die Gehäusewand 15 in das Innere des Motorgehäuses respektive des Antriebsmotors 11 strömen kann. Dort strömt es, soweit ein entsprechender Fluidpfad eingerichtet ist respektive dies ermöglicht, an entsprechenden, zu kühlenden Flächen oder Bauteilen vorbei und strömt durch den Ringspalt 24 auch wieder zurück in den Bereich der Umlenkkavität 14, so dass es letztlich aus dieser in die Fluidkammer 10 gelangt und abgeführt wird. Das heißt, dass eine aktive Kühlung des Antriebsmotors 11 über das geförderte Kühlfluid möglich ist, das ohnehin mit axialer Strömungsrichtung aus dem Spindelgehäuse 2 austritt und mit eben dieser Strömungsrichtung in axialer Verlängerung durch den Ringspalt 24 strömt und in das Motorgehäuse respektive den Antriebsmotor 11 gelangt. Diese aktive Kühlung ist sehr förderlich für den Motorenbetrieb respektive die abrufbare Motorleistung und den Wirkungsgrad.

Der Antriebsmotor 11 ist hier nur stilisiert dargestellt. Er weist ein Motorgehäuse auf, beispielsweise aus Metall oder Kunststoff, das den Antriebsmotor als solchen kapselt, und Teil welches Motorgehäuses die Gehäusewand 15 ist. Diese ist quasi kalottenförmig vertieft ausgeführt, um die Umlenkkavität 14 zu bilden, wobei am Boden dieser Vertiefung Stützelemente 25 angeformt sein können, die axial zum Spindelgehäuse 2 laufen und an welchen Stützelementen 25 die beiden Laufspindeln 4 axial abgestützt sind. An der anderen Seite ist die Abstützung über die Passfeder 8 gegeben. Die Antriebsspindel ist ebenfalls an der Passfeder 8 abgestützt, aber auch an der Antriebswelle 12.

Im Inneren des Antriebsmotors 11 kann je nach Kühlbedarf eine entsprechende Kühlstrecke zur Führung des Kühlmittels ausgebildet sein. Denkbar ist es, dass das Kühlfluid entlang einer Platte oder dergleichen entlangströmt, hinter welcher entsprechende Elektronikkomponenten angeordnet sind. Auch ist ein Durchströmen der Rotor-Stator-Anordnung, wie vorliegend exemplarisch angedeutet, denkbar. Das heißt, dass die Führung des Fluids durch den Antriebsmotor 11 je nach Bedarf und Kühlungserfordernis gestaltet wird.

In Fig. 1 sind die entsprechenden Strömungspfeile eingezeichnet, die den Fluidfluss darstellen. Von rechts kommend tritt das Fluid über den Einlassanschluss 6 an der Saugseite ein und gelangt in das an dieser Seite axial offene Spindelgehäuse 2 zum Spindelpaket, das über den Antriebsmotor 11 rotiert. Das Fluid wird, wie durch die Pfeile dargestellt, axial durch das Spindelpaket geschoben und tritt an der Auslassöffnung des Spindelgehäuses 2, das an der Druckseite ebenfalls axial offen ist, aus. Der größte Teil des Fluids wird, wie durch die umlenkenden Pfeile dargestellt, radial nach außen umgelenkt und gelangt in die Fluidkammer 10, wo es den entsprechenden Stabilisierungsdruck auf das Spindelgehäuse 2 ausbildet. Von dort gelangt es sodann in den Auslassanschluss 9 und wird abgezogen. Ein anderer Teil, wie durch die Strömungspfeile angedeutet ist, gelangt durch den Ringspalt 24 in den Antriebsmotor 11, zirkuliert durch diesen und strömt durch den Ringspalt 24 auch wieder zurück, wobei auch dieser Fluidanteil schließlich in die Fluidkammer 10 gelangt und abgeführt wird.

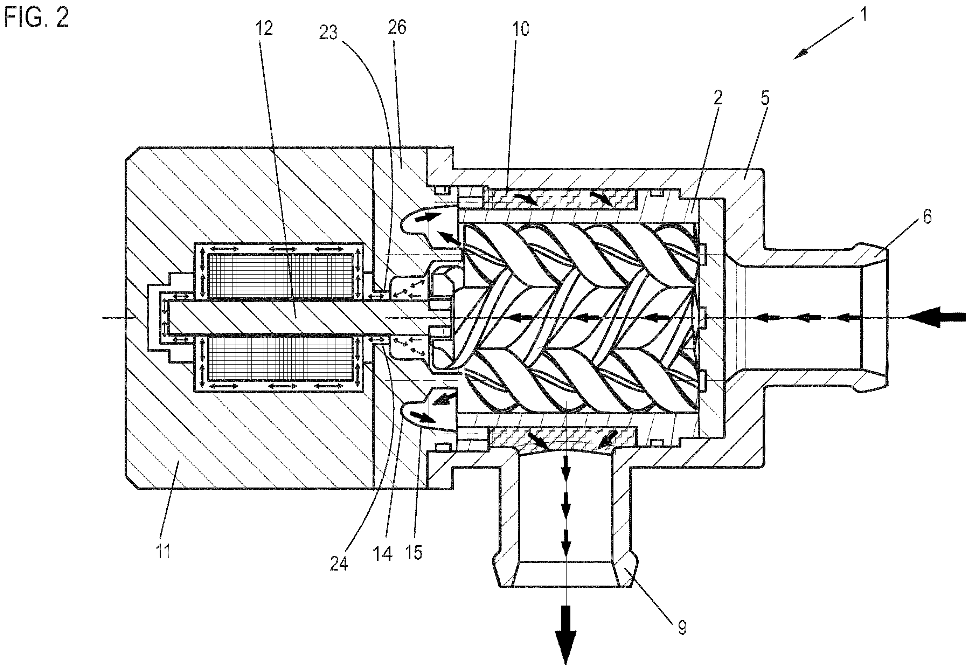

Fig. 2 zeigt eine zweite Ausführungsform einer erfindungsgemäßen Schraubenspindelpumpe 1 in einer Prinzipdarstellung. Der Aufbau ist letztlich identisch zu dem gemäß Fig. 1, auch die grundsätzliche Funktion. Anders ist hier lediglich, dass zwischen dem Antriebsmotor 11 und dem Außengehäuse 5 ein plattenartiges Zwischenbauteil 26 vorgesehen ist, wobei alle drei Teile, nämlich Außengehäuse 5, Zwischenbauteil 26 und Antriebsmotor 5 respektive das Motorgehäuse über gemeinsame Befestigungsmittel axial miteinander verbunden sind. Bei dieser Ausgestaltung bildet das Zwischenbauteil 26 die Gehäusewand 15 aus, die das Außengehäuse 5 axial an dieser Seite schließt, und an der die Umlenkkavität 14 ausgebildet ist. Das Zwischenbauteil 26 respektive seine Gehäusewand 15 ist auch hier mit einer entsprechenden Bohrung 23 versehen, so dass sich auch hier zwischen der Antriebsspindel 12 und der Bohrungsinnenwandung ein Ringkanal 24 ausbildet, durch den auch hier das axial aus dem Spindelgehäuse 2 strömende Fluid in das Innere des Motorgehäuses respektive des Antriebsmotors 11 gelangen und dort zu Kühlzwecken zirkulieren und auch wieder zurückströmen kann. Es gelangt schließlich zusammen mit dem ansonsten üblicherweise über die Umlenkkavität 14 zurückgeförderten Fluid in die Fluidkammer 10, aus der es sodann über den Auslassanschluss 9 abfließt.

Das heißt, dass im Unterschied zur Ausgestaltung gemäß Fig. 1 hier ein Zwischenbauteil 26 quasi sandwichartig zwischen Außengehäuse 5 und Antriebsmotor 11 geschaltet ist, wobei der Außengehäuseabschluss über dieses Zwischenbauteil 26 realisiert wird. Der Antriebsmotor 11 kann folglich an der zum Zwischenbauteil 26 weisenden Seite je nach Bedarf offen ausgeführt werden, da wie gesagt der Außengehäuseabschluss über das Zwischenbauteil 26 erfolgt. Die Ausbildung des Ringspalts 24 erfolgt folglich hier allein im Zwischenbauteil 26, nicht aber am oder im Motorgehäuse.

Die Konfiguration der Umlenkkavität 14 des Zwischenbauteils 26 kann identisch zu der Umlenkkavität 14 gemäß dem Ausführungsbeispiel nach Fig. 1 sein. Auch hier ist die Umlenkkavität 14 bevorzugt als topfartige Vertiefung ausgeführt, in der beispielsweise die beiden Stützelemente 25 angeformt sind. Wie auch bei dem Spindelgehäuse 2 kann es sich bei dem Zwischenbauteil 26 ebenfalls um ein Kunststoffbauteil handeln, wie übrigens auch im Falle des Außengehäuses 5.

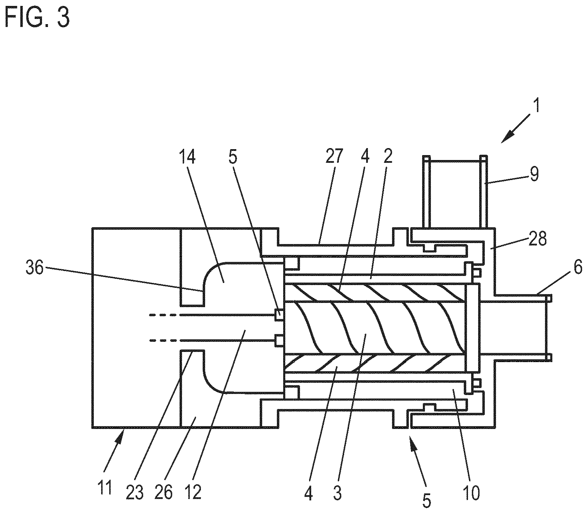

Fig. 3 zeigt schließlich eine Prinzipdarstellung einer dritten Ausführungsform einer erfindungsgemäßen Schraubenspindelpumpe 1 mit einem Spindelgehäuse 2 und einer darin aufgenommenen Antriebspindel 3 und den beiden Laufspindeln 4. Das Spindelgehäuse 2 ist auch hier in einem Außengehäuse 5 aufgenommen, das hier jedoch zweiteilig ausgeführt ist. Es besteht einerseits aus einem quasi hohlzylindrischen Basisteil 27, das an der Saugseite axial über ein Deckelbauteil 28 abgeschlossen ist, an dem einerseits der Einlassanschluss 6 und andererseits der Auslassanschluss 9 vorgesehen ist. Das Deckelbauteil 28 ist auf das Basisteil 27 aufgesetzt und übergreift dieses radial, wobei in diesem Bereich entsprechende, nicht näher gezeigte Dichtmittel vorgesehen sind.

Ansonsten ist auch bei dieser Erfindungsausgestaltung ein Zwischenbauteil 26 vorgesehen, das eine Gehäusewand 15 bildet, in der wiederum die Umlenkkavität 14 ausgebildet ist. Der auch hier nur stilisiert dargestellte Antriebsmotor 11 greift mit seiner Antriebswelle 12 durch eine Bohrung 23 in der Gehäusewand 15, so dass sich auch hier ein Ringspalt 24 ausbildet, der den axialen Fluidfluss aus dem Spindelgehäuse 2 in den Antriebsmotor 11 und zurück zu Kühlzwecken erlaubt. Auch hier ist eine entsprechende Fluidkammer 10 vorgesehen, die einen Druckmantel um das Spindelgehäuse 2 aufbaut, und die einerseits mit dem Fluidauslass des Spindelgehäuses 2 kommuniziert, und andererseits mit dem Auslassanschuss 9. Die grundsätzliche Funktion dieser hier nur dem Prinzip nach gezeigten Schraubenspindelpumpe 1 entspricht den vorstehenden Ausführungsformen, anders ist hier lediglich der Aufbau des Außengehäuses 5 als zweiteiliges Außengehäuse.

## Patentansprüche

1. Schraubenspindelpumpe, mit einem Spindelgehäuse (2), in dem eine Antriebsspindel (3) und wenigstens eine mit dieser kämmende Laufspindel (4) in Spindelbohrungen aufgenommen sind, und mit einem das Spindelgehäuse (2) einhausenden Außengehäuse (5), an dem ein axialer Einlassanschluss (6) und ein radialer Auslassanschluss (9) vorgesehen sind, wobei das Spindelgehäuse (2) einen axialen Fluidauslass für das über die Antriebs- und die Laufspindel (3, 4) durch das Spindelgehäuse (2) geförderte Fluid aufweist, sowie mit einem Antriebsmotor (11) umfassend eine Antriebswelle (12), die durch eine Bohrung (23) in einer das Innere des Außengehäuses (5) axial schließenden Gehäusewand (15) läuft und mit der Antriebsspindel (12) gekoppelt ist, **dadurch gekennzeichnet, dass**
ein Teil des aus dem Fluidauslass des Spindelgehäuses (2) strömenden Fluids durch die dichtungslose Bohrung (23) entlang der Antriebswelle (12) in den Antriebsmotor (11) strömt, diesen kühlt und durch die Bohrung entlang der Antriebswelle oder durch eine oder mehrere Durchbrechungen in der Gehäusewand zurück in das Außengehäuse (5) strömt.

2. Schraubenspindelpumpe nach Anspruch 1, **dadurch gekennzeichnet, dass** der Antriebsmotor (11) unmittelbar auf das Außengehäuse (5) gesetzt ist, wobei ein Gehäuse des Antriebsmotors (11) eine die Gehäusewand (15) bildende Stirnwand aufweist.

3. Schraubenspindelpumpe nach Anspruch 1, **dadurch gekennzeichnet, dass** ein plattenförmiges Zwischenbauteil (26) vorgesehen ist, das auf das Außengehäuse (5) gesetzt ist und die Gehäusewand (15) bildet, wobei der Antriebsmotor (15) auf das Zwischenbauteil (26) gesetzt ist.

4. Schraubenspindelpumpe nach einem der vorangehenden Ansprüche,
**dadurch gekennzeichnet, dass** der axiale Fluidauslass für das über die Antriebs- und die Laufspindel (3, 4) durch das Spindelgehäuse (2) geförderte Fluid mit einer zwischen dem Spindelgehäuse (2) und dem Außengehäuse (5) ausgebildeten, sich um 360° erstreckenden Fluidkammer (10) kommuniziert, die wiederum mit dem radialen Auslassanschluss (9) kommuniziert.

5. Schraubenspindelpumpe nach Anspruch 4, **dadurch gekennzeichnet, dass** sich die Fluidkammer (10) über wenigstens die halbe Länge der Spindelbohrung erstreckt.

6. Schraubenspindelpumpe nach Anspruch 4 oder 5, **dadurch gekennzeichnet, dass** die Fluidkammer (10) entweder über zwei Radialflansche (17, 18) axial begrenzt ist, wobei der eine Radialflansch (17) mehrere axiale Durchbrechungen (16) aufweist, über die die Fluidkammer (10) mit dem Fluidauslass des Spindelgehäuses (2) verbunden ist, oder dass die Fluidkammer über einen Radialflansch (17) einerseits, der mehrere axiale Durchbrechungen (16) aufweist, über die die Fluidkammer (10) mit dem Fluidauslass des Spindelgehäuses (2) verbunden ist, und andererseits über ein Deckelbauteil (28) axial begrenzt ist.

7. Schraubenspindelpumpe nach einem der Ansprüche 4 bis 6, **dadurch gekennzeichnet, dass** die Stirnwand des Gehäuses des Antriebsmotors (11) eine oder mehrere, das vom Fluidauslass des Spindelgehäuses (2) kommende Fluid zur Fluidkammer (10) umlenkende Umlenkkavitäten (14) aufweist.

8. Schraubenspindelpumpe nach einem der Ansprüche 4 bis 6, **dadurch gekennzeichnet, dass** das Zwischenbauteil (28) eine oder mehrere, das vom Fluidauslass des Spindelgehäuses (2) kommende Fluid zur Fluidkammer (10) umlenkende Umlenkkavitäten (14) aufweist.

9. Schraubenspindelpumpe nach Anspruch 7 oder 8, **dadurch gekennzeichnet, dass** die eine Umlenkkavität (14) eine ringförmige Nut oder topfartige Vertiefung ist, die im Bereich des Nut- oder Vertiefungsgrunds rundlich ausgeführt ist.

10. Schraubenspindelpumpe nach einem der vorangehenden Ansprüche, **dadurch gekennzeichnet, dass** das Spindelgehäuse (2), das Außengehäuse (5) und/oder Zwischenbauteil (28) aus Kunststoff sind.

11. Schraubenspindelpumpe nach einem der vorangehenden Ansprüche, **dadurch gekennzeichnet, dass** eine mittige Antriebsspindel (3) und zwei beidseits davon angeordnete Laufspindeln (4) vorgesehen sind.

12. Schraubenspindelpumpe nach einem der vorangehenden Ansprüche, **dadurch gekennzeichnet, dass** der Einlassanschluss (6) mit einer Zentralachse des die Antriebsspindel (3) und die eine oder die beiden Laufspindeln (4) umfassenden Spindelpakets fluchtend angeordnet ist.

13. Verwendung einer Schraubenspindelpumpe (1) nach einem der vorangehenden Ansprüche in einem Kraftfahrzeug zum Fördern einer Betriebsflüssigkeit.

14. Verwendung nach Anspruch 13, **dadurch gekennzeichnet, dass** die Schraubenspindelpumpe (1) als Kühlmittelpumpe, insbesondere zum Fördern eines der Kühlung eines Energiespeichers dienenden Kühlmittels verwendet wird.

## Claims

1. Screw spindle pump, having a spindle housing (2) in which a drive spindle (3) and at least one running spindle (4) meshing therewith are received in spindle bores, and having an external housing (5) which accommodates the spindle housing (2), an axial inlet connection (6) and a radial outlet connection (9) being provided on said external housing, wherein the spindle housing (2) has an axial fluid outlet for the fluid conveyed via the drive spindle and the running spindle (3, 4) through the spindle housing (2), as well as having a drive motor (11) comprising a drive shaft (12) which runs through a bore (23) in a housing wall (15), which axially closes the interior of the external housing (5), and which is coupled to the drive spindle (12), **characterized in that** a part of the fluid flowing out of the fluid outlet of the spindle housing (2) flows through the seal-free bore (23) along the drive shaft (12) into the drive motor (11), cools this drive motor and flows back into the external housing (5) through the bore along the drive shaft or through one or more through-openings in the housing wall.

2. Screw spindle pump according to Claim 1, **characterized in that** the drive motor (11) is directly placed on the external housing (5), wherein a housing of the drive motor (11) has a front wall forming the housing wall (15).

3. Screw spindle pump according to Claim 1, **characterized in that** a plate-shaped intermediate component (26) which is placed on the external housing (5) and forms the housing wall (15) is provided, wherein the drive motor (15) is placed on the intermediate component (26).

4. Screw spindle pump according to one of the preceding claims, **characterized in that** the axial fluid outlet for the fluid conveyed via the drive spindle and the running spindle (3, 4) through the spindle housing (2) communicates with a fluid chamber (10) which is configured between the spindle housing (2) and the external housing (5) and which extends over 360°, said fluid chamber in turn communicating with the radial outlet connection (9).

5. Screw spindle pump according to Claim 4, **characterized in that** the fluid chamber (10) extends over at least half the length of the spindle bore.

6. Screw spindle pump according to Claim 4 or 5, **characterized in that** either the fluid chamber (10) is axially defined via two radial flanges (17, 18), wherein the one radial flange (17) has a plurality of axial through-openings (16), the fluid chamber (10) being connected thereby to the fluid outlet of the spindle housing (2), or **in that** the fluid chamber is axially defined via one radial flange (17), on the one hand, which has a plurality of axial through-openings (16), the fluid chamber (10) being connected thereby to the fluid outlet of the spindle housing (2) and, on the other hand, via a cover component (28).

7. Screw spindle pump according to one of Claims 4 to 6, **characterized in that** the front wall of the housing of the drive motor (11) has one or more deflection cavities (14) which deflect the fluid coming from the fluid outlet of the spindle housing (2) to the fluid chamber (10).

8. Screw spindle pump according to one of Claims 4 to 6, **characterized in that** the intermediate component (28) has one or more deflection cavities (14) which deflect the fluid coming from the fluid outlet of the spindle housing (2) to the fluid chamber (10).

9. Screw spindle pump according to Claim 7 or 8, **characterized in that** the one deflection cavity (14) is an annular groove or a pot-like recess which is designed to be rounded in the region of the groove base or recess base.

10. Screw spindle pump according to one of the preceding claims, **characterized in that** the spindle housing (2), the external housing (5) and/or the intermediate component (28) are made of plastics.

11. Screw spindle pump according to one of the preceding claims, **characterized in that** a central drive spindle (3) and two running spindles (4) arranged on either side thereof are provided.

12. Screw spindle pump according to one of the preceding claims, **characterized in that** the inlet connection (6) is arranged in alignment with a central axis of the spindle pack comprising the drive spindle (3) and the one or the two running spindles (4).

13. Use of a screw spindle pump (1) according to one of the preceding claims in a motor vehicle for conveying an operating fluid.

14. Use according to Claim 13, **characterized in that** the screw spindle pump (1) is used as a coolant pump, in particular for conveying a coolant serving for cooling an energy storage device.

## Revendications

1. Pompe à broche hélicoïdale, comportant un boîtier de broche (2) dans lequel une broche d'entraînement (3) et au moins une broche mobile (4) s'engrenant avec celle-ci sont logées dans des alésages de broche, et comportant un boîtier extérieur (5) recevant le boîtier de broche (2), boîtier extérieur sur lequel sont prévus un raccord d'entrée (6) axial et un raccord de sortie (9) radial, dans laquelle le boîtier de broche (2) présente une sortie de fluide axiale pour le fluide refoulé à travers le boîtier de broche (2) par le biais des broches d'entraînement et mobile (3, 4), et comportant un moteur d'entraînement (11) comprenant un arbre d'entraînement (12) qui s'étend à travers un alésage (23) dans une paroi de boîtier (15) fermant axialement l'intérieur du boîtier extérieur (5) et est accouplé à la broche d'entraînement (12), **caractérisée en ce qu'**une partie du fluide s'écoulant hors de la sortie de fluide du boîtier de broche (2) s'écoule à travers l'alésage (23) dépourvu de joint d'étanchéité le long de l'arbre d'entraînement (12) dans le moteur d'entraînement (11), refroidit celui-ci et s'écoule à travers l'alésage le long de l'arbre d'entraînement ou à travers une ou plusieurs ouvertures dans la paroi de boîtier de manière à revenir dans le boîtier extérieur (5).

2. Pompe à broche hélicoïdale selon la revendication 1, **caractérisée en ce que** le moteur d'entraînement (11) est placé directement sur le boîtier extérieur (5), un boîtier du moteur d'entraînement (11) présentant une paroi frontale formant la paroi de boîtier (15).

3. Pompe à broche hélicoïdale selon la revendication 1, **caractérisée en ce qu'**un composant intermédiaire (26) en forme de plaque est prévu, lequel est placé sur le boîtier extérieur (5) et forme la paroi de boîtier (15), le moteur d'entraînement (15) étant placé sur le composant intermédiaire (26).

4. Pompe à broche hélicoïdale selon l'une des revendications précédentes, **caractérisée en ce que** la sortie de fluide axiale pour le fluide refoulé à travers le boîtier de broche (2) par le biais des broches d'entraînement et mobile (3, 4) communique avec une chambre de fluide (10) formée entre le boîtier de broche (2) et le boîtier extérieur (5), s'étendant sur 360°, laquelle chambre de fluide communique pour sa part avec le raccord de sortie (9) radial.

5. Pompe à broche hélicoïdale selon la revendication 4, **caractérisée en ce que** la chambre de fluide (10) s'étend sur au moins la moitié de la longueur de l'alésage de broche.

6. Pompe à broche hélicoïdale selon la revendication 4 ou 5, **caractérisée en ce que** soit la chambre de fluide (10) est délimitée axialement par le biais de deux rebords radiaux (17, 18), l'un des rebords radiaux (17) présentant plusieurs ouvertures (16) axiales par le biais desquelles la chambre de fluide (10) est reliée à la sortie de fluide du boîtier de broche (2), soit la chambre de fluide est délimitée axialement par le biais d'un rebord radial (17) d'une part, lequel présente plusieurs ouvertures (16) axiales par le biais desquelles la chambre de fluide (10) est reliée à la sortie de fluide du boîtier de broche (2), et par le biais d'un composant formant couvercle (28) d'autre part.

7. Pompe à broche hélicoïdale selon l'une des revendications 4 à 6, **caractérisée en ce que** la paroi frontale du boîtier du moteur d'entraînement (11) présente une ou plusieurs cavités de déviation (14) déviant vers la chambre de fluide (10) le fluide provenant de la sortie de fluide du boîtier de broche (2).

8. Pompe à broche hélicoïdale selon l'une des revendications 4 à 6, **caractérisée en ce que** le composant intermédiaire (28) présente une ou plusieurs cavités de déviation (14) déviant vers la chambre de fluide (10) le fluide provenant de la sortie de fluide du boîtier de broche (2).

9. Pompe à broche hélicoïdale selon la revendication 7 ou 8, **caractérisée en ce que** la cavité de déviation (14) est une rainure annulaire ou un évidement en forme de pot qui est réalisé(e) de manière arrondie dans la région du fond de rainure ou d'évidement.

10. Pompe à broche hélicoïdale selon l'une des revendications précédentes, **caractérisée en ce que** le boîtier de broche (2), le boîtier extérieur (5) et/ou le composant intermédiaire (28) sont en matière synthétique.

11. Pompe à broche hélicoïdale selon l'une des revendications précédentes, **caractérisée en ce qu'**une broche d'entraînement (3) centrale et deux broches mobiles (4) disposées de part et d'autre de celle-ci sont prévues.

12. Pompe à broche hélicoïdale selon l'une des revendications précédentes, **caractérisée en ce que** le raccord d'entrée (6) est disposé en alignement avec un axe central de l'ensemble de broches comprenant la broche d'entraînement (3) et la ou les deux broches mobiles (4).

13. Utilisation d'une pompe à broche hélicoïdale (1) selon l'une des revendications précédentes dans un véhicule automobile pour le refoulement d'un liquide de service.

14. Utilisation selon la revendication 13, **caractérisée en ce que** la pompe à broche hélicoïdale (1) est utilisée comme pompe à fluide de refroidissement, en particulier pour le refoulement d'un fluide de refroidissement servant au refroidissement d'un accumulateur d'énergie.
